# EUROPÄISCHE PATENTANMELDUNG

(11) **EP 2 030 856 A1**
(43) Veröffentlichungstag der Anmeldung: **04.03.2009**
(21) Anmeldenummer: 07115029.6
(22) Anmeldetag: 27.08.2007
(51) Int. Cl.: B60W 10/06, B60W 10/30, B60W 30/18, F02B 39/10, B60K 6/00, F04C 18/16, F04C 18/08

(54) **Verfahren und zur Ausführung des Verfahrens notwendige Vorrichtung zur Erhöhung der Effizienz eines Antriebs eines Fahrzeuges**

(71) Anmelder: Klingelnberg AG, 8023 Zürich (CH)
(72) Erfinder: Müller, Hartmuth, 42857 Remscheid (DE)
(74) Vertreter: OK pat AG

(57) **Zusammenfassung**

Vorrichtung (100) mit einem Kompressor (2) zur Erhöhung der Effizienz eines Antriebs eines Fahrzeuges. Bei dem Kompressor (2) handelt es sich um einen von einem Verbrennungsmotor (9) des Antriebs mechanisch unabhängigen elektrischen Kompressor (2) mit einem elektrischen Antrieb (5). Der Kompressor (2) weist einen Luftkanal (4) und einen Frischlufteintritt (1), sowie eine Regelelektronik (10) auf. Weiterhin ist eine Rückgewinnungsvorrichtung (15) zum Rückgewinnen von elektrischer Energie beim Bremsen des Fahrzeuges und zum Laden einer Hochleistungsbatterie (16) des Fahrzeuges mit dieser Energie vorgesehen.

## Beschreibung

Gegenstand der Erfindung ist eine Vorrichtung zur Erhöhung der Effizienz eines Antriebs eines Fahrzeuges, sowie entsprechende Verfahren.

Verschiede so genannte Hybridfahrzeuge sind schon lange bekannt, die eine höhere Effizienz als herkömmliche Fahrzeuge haben. Eine solches Hybridfahrzeug muss verschiede zusätzliche Komponenten umfassen. Eine hochleistungsfähige Batterie liefert die Spannung. Die erforderliche elektrische Energie kann erzeugt werden, indem zum Beispiel ein Spannungsverstärker zum Verstärken einer von Motor und Generator gelieferten Gleichspannung eingesetzt wird. Weiterhin braucht ein solches Fahrzeug hochleistungsfähige Elektromotoren und bei einem sogenannten parallelen und serien-parallelen Hybridsystem auch eine Kraftweiche mit welcher ein Teil der Energie vom Verbrennungsmotor auf die Antriebsräder geleitet wird. Ein anderer Teil der Energie wird zum Generator geleitet. Es ist evident, dass diese Hybridfahrzeuge sehr kompliziert und somit sehr teuer sind. Weitere Nachteile der Hybridfahrzeuge sind das erhöhte Gewicht und der reduzierte Kofferraum.

Es ist allgemein bekannt, dass der Effizienz eines Antriebs eines Fahrzeuges durch die Erhöhung des Eintrittsluftdrucks des Verbrennungsmotors erhöht werden kann. Die Effizienz kann auch durch die Erhöhung des Volumens der von dem Verbrennungsmotor eingesaugten Luft erhöht werden. Dadurch kann die Effizienz des Verbrennungsprozesses verbessert werden. Eine sehr effiziente Verbrennung erlaubt eine Reduzierung des Hubraumes (downsizing genannt) des Verbrennungsmotors und auf diese Weise eine Reduzierung des Verbrauches, ohne Leistungskompromisse machen zu müssen.

Verschiedene Ansätze sind bekannt. Viele der zur Zeit hergestellten Verbrennungsmotoren sind mit einem Abgasturbolader ausgerüstet. Abgasturbolader haben aber nur einen Wirkungsgrad von max. 40%, und alle haben den grossen Nachteil, dass, aufgrund des Konzepts von Abgasturboladern, zuerst Abgas von dem Verbrennungsmotor mit ausreichendem Druck ausgestossen werden muss. Nur dann kann der Abgasturbolader einen erhöhten Eintrittsluftdruck durch den als Verdichter arbeitenden Turbolader erzeugen. Das bedeutet, dass alle Abgasturbolader einen unteren Umdrehungszahl-Schwellenwert haben, über dem die Turbolader funktionieren. Ausserdem tritt ein sogenanntes Turboloch auf, das mehr oder weniger stark zu spüren sein kann.

Es gibt auch Verbrennungsmotoren, die mit einem Kompressor ausgerüstet sind. Da der Kompressor über Riemen direkt vom Verbrennungsmotor mechanisch angetrieben wird, steht sein Zusatzdruck bereits ab der Leerlaufdrehzahl zur Verfügung. Diese Kompressoren sind eine gute Lösung, um das Turboloch zu unterbinden und eignen sich besonders zur Verwendung bei niedrigen Drehzahlen. Sie haben aber den Nachteil, dass sie, weil sie vom Verbrennungsmotor angetrieben sind, bei hohen Drehzahlen viel Leistung des Motors verbrauchen und in einem ungünstigen Betriebspunkt arbeiten müssen.

Ein Teil dieser Nachteile kann durch eine Kombination von Abgasturbolader und Kompressoren behoben werden. In dieser Kombination wird der Kompressor entkoppelt, wenn die Drehzahl für den Abgasturbolader ausreicht.

Aufgabe der Erfindung ist es daher, ein Verfahren und die zur Ausführung des Verfahrens notwendige Vorrichtung bereit zu stellen, um möglichst einfach und kostengünstig die Erhöhung der Effizienz eines Antriebes eines Fahrzeuges bewerkstelligen zu können, wobei z.B. die Leistung eines Verbrennungsmotors des Fahrzeuges bereits bei niedrigen Drehzahlen des Verbrennungsmotors erhöht werden soll und/oder um eine Reduktion des Brennstoffverbrauchs bei gleicher oder annähernd gleicher Leistung zu ermöglichen.

Die Lösung dieser Aufgabe erfolgt erfindungsgemäss durch ein Verfahren, das die in Anspruch 1 oder in Anspruch 5 genannten Merkmale aufweist.

Die Lösung dieser Aufgabe erfolgt weiterhin erfindungsgemäss durch eine Vorrichtung, welche die in Anspruch 7 genannten Merkmale aufweist.

Bevorzugte Weiterbildungen der Erfindung sind durch die abhängigen Ansprüche definiert.

Gemäss Erfindung wird eine Vorrichtung eingesetzt, die eine Erhöhung des Eintrittsluftdrucks eines Verbrennungsmotors des Fahrzeuges erzielt. Diese Erhöhung des Eintrittsluftdrucks des Motors wird mit einem von dem Verbrennungsmotor mechanisch unabhängigen, elektrisch (an-)getriebenen Kompressor erzielt.

Die Vorrichtung weist eine komplexe Regelelektronik auf, welche mit der Motorsteuerung zusammenarbeitet, um den Eintrittsluftdruck des Motors unverzüglich, rechtzeitig und angepasst an den momentan erforderlichen Leistungsbedarf einstellen und kontrollieren zu können.

Aufgrund der mechanische Unabhängigkeit des Kompressors, weist die Vorrichtung den grossen Vorteil auf, dass die Erhöhung der Leistung sehr dynamisch und nur bei Bedarf erfolgt, insbesondere aber dass bei Leerlauf oder bei niedrigem Leistungsbedarf dieser Kompressor ausgeschaltet ist, um keine weitere Energie von der Batterie abzufordern. Dadurch kann z.B. der Brennstoffverbrauch deutlich reduziert werden, oder ein konventioneller Motor kann bei Bedarf mehr Leistung bringen.

Wegen der speziellen Regelelektronik, hat die Vorrichtung den weiteren Vorteil, dass die Funktion und das (Drehzahl-)Verhalten des unabhängigen Kompressors programmierbar sein können. Durch die Programmierbarkeit der Regelelektronik, kann die Vorrichtung z.B. problemlos für Anwendung in verschiedenartigen Fahrzeugen angepasst werden. Deshalb ist es z.B. möglich, die gleiche oder eine ähnliche Vorrichtung in einem brennstoffeffizienten/abgasreduzierten Fahrzeug und auch in einem leistungsstarken Sportwagen zu benutzen.

Um die Effizienz des Fahrzeuges weiter zu verbessern, kann zusätzlich eine sogenannte Rückgewinnungsvorrichtung eingesetzt werden, um Energie beim Bremsen zurückzugewinnen. Diese Lösung ist besonders vorteilhaft, da der elektrisch angetriebene Kompressor bei Bedarf mit ausreichend elektrischer Energie versorgt werden muss.

Im Vergleich zu den bekannten Hybridfahrzeugen, hat die Erfindung unter anderem die folgende Vorteile: sie biete eine unkomplizierte Anordnung ohne die zusätzliche Komponenten, die alle Hybridfahrzeuge aufweisen, haben zu müssen; gegenüber Hybridfahrzeugen ist nur ca. ein Drittel des Gewichtes und der Grösse der Batterie(n) nötig; es kann der Verbrennungsmotor und der Antriebsstrang eines konventionellen Fahrzeugs eingesetzt werden; erfindungsgemässe Fahrzeuge erreichen eine ähnliche oder sogar bessere Brennstoffeffizienz als Hybridfahrzeuge, ein erfindungsgemässes Fahrzeug kostet deutlich weniger als ein Hybridfahrzeug und erfindungsgemässes Fahrzeug wiegt weniger, als ein Hybridfahrzeug.

Weitere Einzelheiten und Vorteile der Erfindung werden im Folgenden anhand von Ausführungsbeispielen und mit Bezug auf die Zeichnung beschrieben. Es zeigen:
- **Fig. 1**: eine schematische Ansicht einer ersten Vorrichtung gemäss Erfindung;

- **Fig. 2**: ein schematisches Diagramm, das verschiedene mögliche Arbeitsphasen in einem ersten Betriebsmode einer Vorrichtung gemäss Erfindung darstellt,
- **Fig. 3**: eine perspektivische Ansicht eines elektrischen Kompressors, gemäss Erfindung.

### DETAILLIERTE BESCHREIBUNG

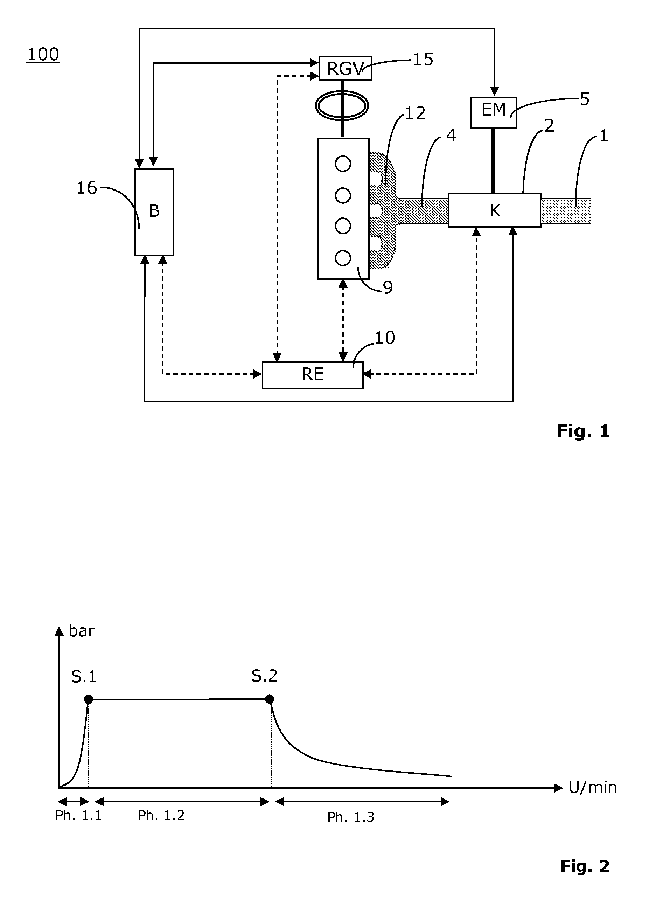

Eine schematische Ansicht einer ersten Gesamtvorrichtung 100 gemäss Erfindung ist in Fig. 1 gezeigt. Die Erfindung bezieht sich auf eine Verbesserung der Effizienz eines Fahrzeuges durch eine dynamische (bedarfsangepasste) Erhöhung des Eintrittsluftdrucks eines Verbrennungsmotors 9 des Fahrzeuges, um z.B. die Leistung des Verbrennungsmotors 9 zu erhöhen und somit ein so genanntes "downsizing" des Verbrennungsmotors 9 zu erlauben.

Gemäss Erfindung wird ein elektrischer Kompressor 2 eingesetzt, der den Frischlufteintritt 1 des Verbrennungsmotors 9 verbessert, respektive regelt. Wenn der Kompressor 2 eingeschaltet ist, erhöht der Kompressor 2 den Eintrittsluftdruck im Saugrohr 12 in der Ansaugöffnung oder auf der Einlassseite und deshalb die Leistung des Verbrennungsmotors 9. In der bevorzugten Ausführungsform der Erfindung kann der Kompressor 2 den Eintrittsluftdruck mit bis zu 3 bar erhöhen.

Der Kompressor 2 der Vorrichtung 100 ist ein autarker, sogenannter "intelligenter Kompressor", der einen Drehzahlverlauf (oder Drehzahlverhalten) hat, der entkoppelt ist vom Drehzahlverlauf des Verbrennungsmotors 9. Diese Entkopplung ist möglich durch die Benutzung einer (Hochleistungs-)Batterie 16 und weil der Kompressor 2 ein elektrischer Kompressor ist, der über einen Elektromotor 5 antreibbar ist. Ein wichtiger weiterer Vorteil der Benutzung eines elektrischen Kompressors 2 ist, dass die Rotoren des Kompressors 2 vom Ruhezustand bis zur Maximaldrehzahl in weniger als 1 Sekunde hochgefahren werden können. Dieser Vorteil ist sehr wichtig, weil somit das so genannte Turboloch, das bei der Benutzung eines Turboladers immer ein Problem ist, eliminiert werden kann.

In eine bevorzugte Ausführungsform der Erfindung handelt es sich bei dem Kompressor 2 um einen sogenannten getriebelosen Kompressor 2, der einen elektrisch angetriebenen ersten Rotor und einen mitlaufenden zweiten Rotor umfasst. Damit der zweite Rotor sauber mitläuft, d.h. von dem ersten Rotor angetrieben wird, muss an einer der Vorderflanken des ersten Rotors eine entlang des Rotorzahns verlaufende, erhabene Rippe vorgesehen sein, die sich im Eingriff mit einer der Rückflanken des zweiten Rotors befindet. Der wichtigste Vorteil dieser getriebelosen Kompressoren 2 ist, dass sie günstiger und einfacher in der Herstellung sind, da sie kein (Synchronisations-)Getriebe brauchen. Ausserdem bilden solche Kompressoren 2 eine in sich geschlossene Funktionseinheit, die einfach durch das Anlegen einer Spannung und eines Stroms zugeschaltet werden können. Diese Art von Kompressoren braucht keinerlei mechanische Ankopplung über Ketten, Zahnräder oder Riemen.

Gemäss Erfindung wird der Kompressor 2 elektrisch angetrieben, wie bereits erwähnt. D.h., er wird nicht mechanisch vom Motor 9 mit Leistung beaufschlagt, sondern es ist ein elektro-mechanischer Antrieb 5 am Kompressor 2 vorgesehen. Die elektrische Energie, die erforderlich ist, kann aus einer Hochleistungsbatterie 16 bezogen werden.

In eine bevorzugte Ausführungsform der Erfindung, wird der Kompressor 2 über einen eigenen Elektromotor 5 angetrieben. Der Elektromotor 5 sollte eine Eingangsleistung von ca. 18kW mit einem Wirkungsgrad von ca. 90% aufweisen, falls er mit einem 4-Zylindermotor 9 kombiniert wird. Damit lassen sich Drehmomente erzielen die im Bereich von 300Nm und mehr liegen.

Gemäss Erfindung wird der Elektromotor 5 von einer Hochleistungsbatterie 16 des Fahrzeuges angetrieben, wie erwähnt. In einer weiteren Ausführungsform der Erfindung, sind der Elektromotor 5 des Kompressors 2 und der Motoranlasser als ein gemeinsames Gerät ausgeführt. Dies hat verschiedene Vorteile, wie z.B. eine Kostensenkung oder einer Reduktion des Platzbedarfs im Motorraum.

Um den genannten Elektromotor 5 mit 18kW Eingangsleistung mit Energie zu versorgen, wird, gemäss Erfindung, eine Hochleistungsbatterie 16 bereitgestellt. Vorzugsweise wird eine Nickel-Metallhydrid (NiMH) Hochleistungsbatterie 16 benutzt.

Die Erfindung ist nicht limitiert auf NiMH Batterien. Es ist auch möglich, eine Art von Lithium-Polymer Batterie oder andere Batterien einzusetzen, die zur Verwendung in Fahrzeugen ausgelegt sind.

Gemäss einer weiteren Ausführungsform der Erfindung wird der Kompressor 2 zusätzlich oder alternativ mechanisch von einem Schwungrad angetrieben. Dieses Schwungrad wird aus Bremsenergie gespeist. Da nach dem Bremsen meistens wieder eine Beschleunigungsphase folgt, muss die Energie im Schwungrad nur wenige Sekunden bis Minuten "gespeichert" werden. Es gibt Schwungräder die sowohl mechanische als auch elektrische Leistung bereitstellen (siehe z.B. http://www.magnetmotor.de/). Es ist somit auch eine "Hybridversion" der Erfindung möglich, bei welcher der Kompressor 2 vom Schwungrad mit Strom und/oder mechanischer Energie versorgt wird.

Wenn der Kompressor 2 abgeschaltet ist und das Fahrzeug gebremst wird, kommt eine Rückgewinnungsvorrichtung 10 zum Einsatz, die elektrische Energie rück gewinnt und die Hochleistungsbatterie 16 des Fahrzeuges lädt. Ein Generator dieser Rückgewinnungsvorrichtung 10 wird beim Bremsen angetrieben und produziert dadurch elektrische Energie. Mit dieser Energie wird/werden die Hochleistungsbatterie(n) 16 geladen.

Die folgende Tabelle illustriert die verschiedenen Betriebszustände der Vorrichtung.

| Gashebel | Bremshebel | Kompressor Vorrichtung | Rückgewinnungsvorrichtung | Betriebsmodus |
|---|---|---|---|---|
| gedrückt | Nicht gedrückt | Ein | Aus | BM1 |
| Nicht gedrückt | gedrückt | Aus | Ein | BM2 |

Die ganze Vorrichtung 100 hat zwei wichtige Betriebsmoden: BM1 wenn das Fahrzeug beschleunigt oder mit konstanten Geschwindigkeit fährt; und BM2 wenn das Fahrzeug gebremst wird.

Figur 2 beschreibt die Arbeitsphasen (Phasen Ph.1.1 bis Ph.1.3), die während der Betriebsmode BM1 auftreten, des Kompressors 2 der Vorrichtung 100 gemäss Erfindung. Die vertikale Achse stellt den zusätzlichen Eintrittsluftdruck dar, der von dem Kompressor 2 zur Verfügung gestellt wird. Die Phasen stimmen überein mit verschiedenen Umdrehungszahlbereichen des Verbrennungsmotors 9. Wie in Fig. 2 illustriert, wird in Phase 1.1 der Kompressor 2 angeschaltet, sobald ein Leistungserhöhungsbedarf besteht (z.B. falls der Fahrer des Fahrzeugs das Gaspedal durchtritt). Während der Phase 1.2 bleibt der Kompressor 2 angeschaltet, um den Eintrittsluftdruck hoch zu halten. Während der Phase 1.3, wenn die Umdrehungszahl des Verbrennungsmotors 9 so hoch ist, dass die Verwendung des Kompressors 2 nicht mehr nötig ist, kann der Kompressor 2 abgeschaltet oder runter gefahren werden. Während der Phase 1.3 wird der zusätzlichen Eintrittsluftdruck, der von dem Kompressor 2 zu Verfügung gestellt wird, reduziert und nicht der Eintrittsluftdruck des Verbrennungsmotors 9. Dies gilt, weil der Verbrennungsmotor 9 bei hohen Umdrehungszahlen genug Luft (an)saugt, um einen hohen Eintrittsluftdruck selber bereitzustellen. Deshalb ist eine zusätzliche Luftdruckserhöhung bei hohen Drehzahlen nicht mehr unbedingt nötig.

In dem zweiten Betriebsmodus BM2 kommt die so genannte Rückgewinnungsvorrichtung 15 zum Einsatz. Das wichtigste Element der Rückgewinnungsvorrichtung 15 ist ein Generator, der beim Bremsen angetrieben wird und dadurch elektrische Energie rück gewinnt bzw. erzeugt. Gemäss Erfindung wird die Energie, die beim Bremsen rück gewonnen wird, für das Laden der Hochleistungsbatterien 16 des Fahrzeuges benutzt.

Diese Betriebsmoden und ihre Arbeitsphasen können in der Regelelektronik 10 implementiert, respektive durch diese vorgegeben sein.

Um die Betriebsmoden und ihre Arbeitsphasen zu steuern, ermittelt die Regelelektronik 10 während BM1 z.B. die Umdrehungszahl und den Leistungsbedarf des Verbrennungsmotors 9 und steuert den Kompressor 2 so, dass er nur bei einem einen Schwellenwert überschreitenden Leistungsbedarf eingeschaltet wird. Während BM2 ermittelt die Regelelektronik 10 z.B. die Bremsleistung, den Ladezustand der Hochleistungsbatterie(n) 16 und den Energiebedarf der ganzen Vorrichtung 100. Die Rückgewinnungsvorrichtung 15 wird dann so gesteuert, dass die rück gewonnene Energie immer dort angelegt wird, wo sie gebraucht wird.

Die Erfindung zeichnet sich dadurch aus, dass der Kompressor 2 einsetzbar ist, ohne vom Verbrennungsmotor 9 mechanische Antriebsleistung abzufordern, wie dies bei einer mechanischen Aufladung, z. B. durch einen konventionellen Kompressor, geschieht. Mit anderen Worten ausgedrückt, arbeitet der Kompressor 2 autark und hat eine eigene, bzw. dedizierte Regelelektronik 10. Die Regelelektronik 10 kann selbstverständlich in die Motorsteuerung integriert oder mit dieser verknüpft sein. Eine solche Integration oder Verknüpfung kann vorteilhaft sein, da es eine gewisse Korrelation zwischen der Drehzahl des Motors 9, oder anderen Parametern des Motors 9 und den Arbeitsphasen (BM1, BM2) des Kompressors 2 gibt.

Durch den Einsatz der Erfindung kann eine Steigerung der Motorleistung erzielt werden. D.h., es kann ein Antrieb realisiert werden, der das Verhalten eines leistungsstärkeren Motors 9 aufweist. Die Abmessungen des Motors 9 selbst müssen nicht geändert werden. Gemäss Erfindung ist aber auch ein sogenanntes "Downsizing" des Verbrennungsmotors 9, also das Erzielen einer vergleichbaren Leistung aus einer kleineren und ggf. leichteren Maschine, möglich. Der letztere Ansatz gewinnt heutzutage an Bedeutung, da die Abgasmengen dadurch deutlich reduziert werden können.

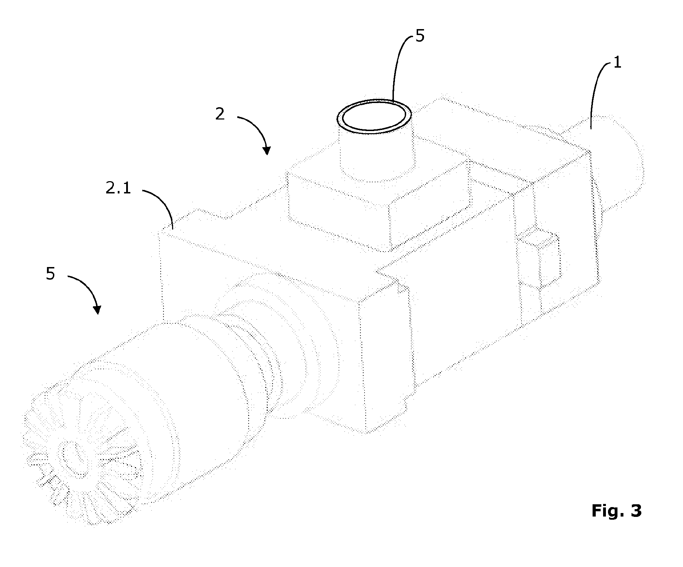

In Fig. 3 ist eine isometrische Ansicht einer Ausführungsform eines elektrischen Kompressors 2 gezeigt. Der Kompressor 2 ist von einem Gehäuse 2.1 umgeben, das die beiden Rotoren aufnimmt. Auf der rechten Seite ist der Einlass 1 zu erkennen. Oben auf dem Gehäuse ist die Austrittsseite 5 vorgesehen. In der gezeigten Ausführungsform dient ein Elektromotor 5 als elektrischer Antrieb der Kompressor-Vorrichtung 2. Der Elektromotor 5 ist an dem Gehäuse 2.1 der Kompressor-Vorrichtung 2 befestigt (angeflanscht) und treibt einen der Rotoren direkt an. In diesem Fall verläuft die Drehachse (Welle) des Elektromotors 5 koaxial zur Welle des direkt angetriebenen Rotors.

In einer weiteren Ausführungsform kann die Welle des direkt angetriebenen Rotors durch eine Öffnung des Gehäuses 2.1 nach draussen geführt werden und der Elektromotor 5 kann direkt auf dieser Welle sitzen. In dieser Ausführungsform kann z.B. der Stator des Elektromotors 5 aussen an dem Gehäuse 2.1 befestigt sein. Durch diese Art der Anordnung kann der Aufwand an Bauteilen reduziert werden.

## Patentansprüche

1. Verfahren zur Erhöhung der Effizienz eines Antriebs eines Fahrzeuges, **dadurch gekennzeichnet, dass** das Verfahren die folgenden Schritte umfasst:
- Bereitstellen einer Kompressor-Vorrichtung (2) mit einem elektrischen Antrieb (5), die von einem Verbrennungsmotor (9) des Antriebs mechanisch entkoppelt ist,
- Ankoppeln eines Luftkanals (4) der Kompressor-Vorrichtung (2) an ein Saugrohr (12) oder eine Ansaugöffnung des Verbrennungsmotors (9),
- Kontrollieren der Kompressor-Vorrichtung (2) mittels einer Regelelektronik (10), welche die Kompressor-Vorrichtung (2) bei einem Leistungserhöhungsbedarf über den elektrischen Antrieb (5) antreibt, um so einen Eintrittsluftdruck im Saugrohr (12) in der Ansaugöffnung zu erhöhen, und wenn nötig, den elektrischen Antrieb (5) abschaltet,
- Rückgewinnen von elektrischer Energie beim Bremsen des Fahrzeuges mit einer Rückgewinnungsvorrichtung (15) und/oder Antreiben eines Generators mittels des Verbrennungsmotors (9), falls nicht die volle Leistung des Verbrennungsmotors (9) abgefragt wird, um so eine Hochleistungsbatterie (16) des Fahrzeuges mit dieser Energie zu laden.

2. Verfahren nach Anspruch 1, **dadurch gekennzeichnet, dass** ein Elektromotor (5) als elektrischer Antrieb (5) dient.

3. Verfahren nach Anspruch 1, **dadurch gekennzeichnet, dass** die Kompressor-Vorrichtung (2) über ein Schwungrad antreibbar ist.

4. Verfahren nach Anspruch 1, 2 oder 3, **dadurch gekennzeichnet, dass** beim Beschleunigen des Fahrzeugs durch Zuschalten des elektrischen Antriebs (5) die Kompressor-Vorrichtung (2) angetrieben wird, um den Eintrittsluftdruck zu erhöhen.

5. Verfahren zum Betreiben eines Fahrzeuges, **dadurch gekennzeichnet, dass** das Verfahren die folgenden Schritte umfasst:
- Starten eines Verbrennungsmotors (9),
- Verbrennungsmotor (9) in einem Leerlaufzustand halten,
- Betätigen eines Gaspedals falls ein Leistungserhöhungsbedarf besteht,
- Antreiben einer Kompressor-Vorrichtung (2) durch das Anlegen elektrischer Energie aus einer Hochleistungsbatterie (16) an einen elektrischen Antrieb (5) der Kompressor-Vorrichtung (2),
- Erhöhen eines Eintrittsluftdruck auf einer Lufteinlassseite (12) des Verbrennungsmotors (9) durch Luft, die aus der Kompressor-Vorrichtung (2) bereitgestellt wird,
- Beschleunigen des Fahrzeuges durch ein Erhöhen der Drehzahl des Verbrennungsmotors (9).

6. Verfahren nach Anspruch 5, **dadurch gekennzeichnet, dass** das Verfahren die folgenden Schritte umfasst:
- Rückgewinnung von elektrischer Energie beim Bremsen des Fahrzeugs mittels einer Rückgewinnungsvorrichtung (15), und/oder
- Antreiben eines Generators mittels des Verbrennungsmotors (9), falls nicht die volle Leistung des Verbrennungsmotors (9) abgefragt wird,
- Laden der Hochleistungsbatterie (16) des Fahrzeuges mit dieser Energie.

7. Vorrichtung (100) mit einer Kompressor-Vorrichtung (2) zur Erhöhung der Effizienz eines Antriebs eines Fahrzeuges, **dadurch gekennzeichnet, dass:**
- die Kompressor-Vorrichtung (2) ein von einem Verbrennungsmotor (9) des Antriebs mechanisch unabhängiger elektrischer Kompressor (2) mit einem elektrischen Antrieb (5) ist,
- die Kompressor-Vorrichtung (2) einen Luftkanal (4) und einen Frischlufteintritt (1) umfasst,
- die Kompressor-Vorrichtung (2) eine Regelelektronik (10) umfasst, welche Umdrehungszahl und Leistungsbedarf des Verbrennungsmotors (9) ermittelt und die Kompressor-Vorrichtung (2) so steuert, dass der elektrische Antrieb (5) nur bei einem einen Schwellenwert überschreitenden Leistungsbedarf eingeschaltet ist,
- die Vorrichtung (100) eine Rückgewinnungsvorrichtung (15) zum Rückgewinnen von elektrischer Energie beim Bremsen des Fahrzeuges und/oder einen Generator, der mechanisch mit dem Verbrennungsmotor (9) gekoppelt ist, umfasst, um eine Hochleistungsbatterie (16) des Fahrzeuges mit dieser Energie laden zu können.

8. Vorrichtung (100) nach Anspruch 7, **dadurch gekennzeichnet, dass** die Kompressor-Vorrichtung (2) eine getriebeloser Kompressor mit einem ersten Rotor und einem zweiten Rotor ist, wobei jeder der Rotoren eine Schrägverzahnung mit mindestens einem Zahn mit Vorderflanken und Rückflanken hat, **dadurch gekennzeichnet, dass** an einer der Vorderflanken des ersten Rotors eine entlang des Zahns verlaufende, erhabene Rippe vorgesehen ist, die sich im Eingriff mit einer der Rückflanken des zweiten Rotors befindet.

9. Vorrichtung (100) nach Anspruch 7 oder 8, **dadurch gekennzeichnet, dass** ein Elektromotor (5) als elektrischer Antrieb (5) der Kompressor-Vorrichtung (2) dient, wobei der Elektromotor (5) an einem Gehäuse (2.1) der Kompressor-Vorrichtung (2) befestigt ist und einen der Rotoren direkt antreibt.

10. Vorrichtung (100) nach Anspruch 7 oder 8, **dadurch gekennzeichnet, dass** die Kompressor-Vorrichtung (2) über ein Schwungrad antreibbar ist.

11. Vorrichtung (100) nach Anspruch 9, **dadurch gekennzeichnet, dass** es sich bei dem Elektromotor (5) um einen Synchronmotor handelt.

12. Vorrichtung (100) nach Anspruch 9, **dadurch gekennzeichnet, dass** die Hochleistungsbatterie (16) dem elektrischen Antrieb (5) bei Bedarf einen Strom zuführt.

13. Vorrichtung (100) nach Anspruch 12, **dadurch gekennzeichnet, dass** die Hochleistungsbatterie (16) dem elektrischen Antrieb (5) bei Bedarf eine Spannung zur Verfügung stellt.
